# EUROPEAN PATENT SPECIFICATION

(11) **EP 2 383 091 B1**
(45) Date of publication and mention of the grant of the patent: **29.08.2012**
(21) Application number: 10382100.5
(22) Date of filing: 29.04.2010
(51) Int. Cl.: B29C 33/30, B29C 51/26, B65B 9/04, B65B 59/04

(54) **Tool change system for a packaging machine**
Werkzeugwechselsystem für eine Verpackungsmaschine
Système de changement d'outil pour machine de conditionnement

(43) Date of publication of application: 02.11.2011
(73) Proprietor: Ulma Packaging Technological Center, S.Coop., 20560 Oñati, Guipuzcoa (ES)
(72) Inventor: Biechteler, Alexander, 20560 Oñati (ES); Madinagoitia Markuleta, Ander, 20560 Oñati (ES)
(74) Representative: Igartua, Ismael

(56) References cited:
- EP-A1- 1 234 765
- DE-A1- 10 022 269
- DE-A1-102007 062 983
- DE-U1- 9 113 290

## Description

### TECHNICAL FIELD

The present invention relates to a tool change system for packaging machines.

### PRIOR ART

Packaging machines are already known in the prior art. Said packaging machines comprise different working stations, such as a forming station, a sealing station and a cutting station, for example. In said working stations a package or a tray is formed (in the forming station), said package is closed (in the sealing station), and if said package has been formed and closed together with other packages, said packages are cut individually (in the cutting station).

The working stations comprise a tool adapted to carry out the corresponding actions, for a package with a predetermined shape. If a package with a different shape is going to be formed, closed and/or cut, it is usually necessary to replace the tool with a new one adapted to support the shape of the new package.

In some packaging machines, said tool is replaced by a direct access of a user to the corresponding station, said user transferring manually the corresponding tool away from the machine. This operation can take a long time, and depending of the size and/or the weight of the tool to be changed, more than one user is commonly necessary.

US 2009100804 A1 discloses a tool change system for packaging machines, which improves the replacement of a tool. Said system comprises a guide track assembly which is linked to the packaging machine with freedom of rotation and which comprises a pair of rails, said rails being caused to rotate in respect of a longitudinal axis when it is desired to replace a tool. Then, the tool is displaced manually upon the rails in order to be transferred away from said machine. A new tool is then disposed, manually, over the rails, and is displaced upon said rails in order to transfer said tool to the machine. Finally the rails are taken back to their original position causing their rotation in respect of the longitudinal axis in the opposite sense.

DE 10022269 A1 discloses a tool change system comprising transfer means adapted to rotatably transfer the tool to or from the packaging machine, the transfer means comprising at least one transfer element which rotates in respect of a vertical shaft linked to a longitudinal structure of the machine, to transfer the tool to or from said machine, said tool rotating jointly with said transfer element.

### DISCLOSURE OF THE INVENTION

It is an object of the invention to provide a tool change system for a packaging machine, as described in the claims.

The tool change system of the invention is adapted for being used in packaging machines. Said system comprises transfer means adapted to transfer a tool to or from the machine, so that it is possible to replace a tool, adapted to work with packages or trays with a predetermined shape, with other tool adapted to work with packages or trays with a different shape, for example.

The transfer means are adapted to rotatably transfer the tool to or from the machine. In this way, it is possible to replace a tool in a very easy, fast and comfortable way, without the need of incorporating additional means for achieving said change, for example. Apart from that, the user in charge of carrying out the change does not have to act upon said tool to transfer it from the machine, the actuation of more than one users being avoided, and a big effort of the user being avoided.

These and other advantages and characteristics of the invention will be made evident in the light of the drawings and the detailed description thereof.

### DESCRIPTION OF THE DRAWINGS

FIG. 1 shows an embodiment of the tool change system of the invention, mounted on a working station of a packaging machine.
FIG. 2 shows in detail the system of FIG. 1, mounted on the working station.
FIG. 3 shows a transfer element of the transfer means of the system of FIG. 1.
FIG. 4 shows a base plate which cooperates with the transfer element of FIG. 3.
FIG. 5 shows the transfer element of FIG. 3, in a rest position.
FIG. 6 shows the transfer element of FIG. 3, in an active position.
FIG. 7 shows a tool transferred from the machine with the system of FIG. 1.
FIG. 8 shows a working station of a packaging machine, comprising two tool change system of the embodiment of FIG. 1.

### DETAILED DISCLOSURE OF THE INVENTION

A package machine 100 comprises different working stations where packages or trays (not shown in figures) are produced. The different working stations can comprise, for example, a forming station, a sealing station and/or a cutting station, but it is possible to comprise additional work stations or not comprise all of said working stations.

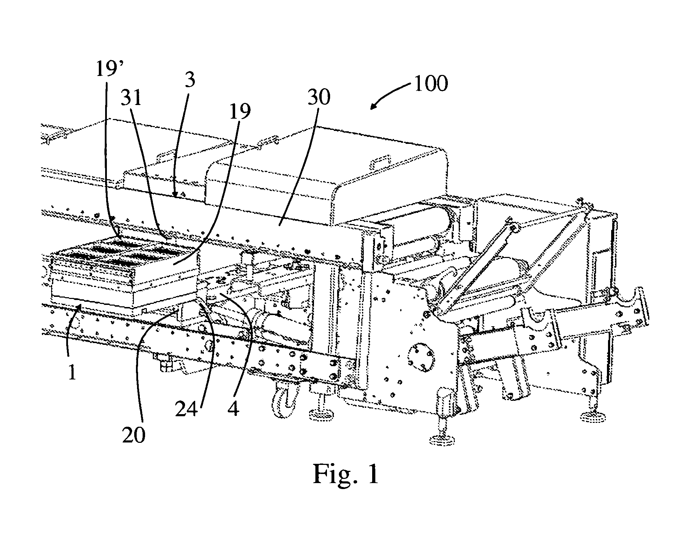

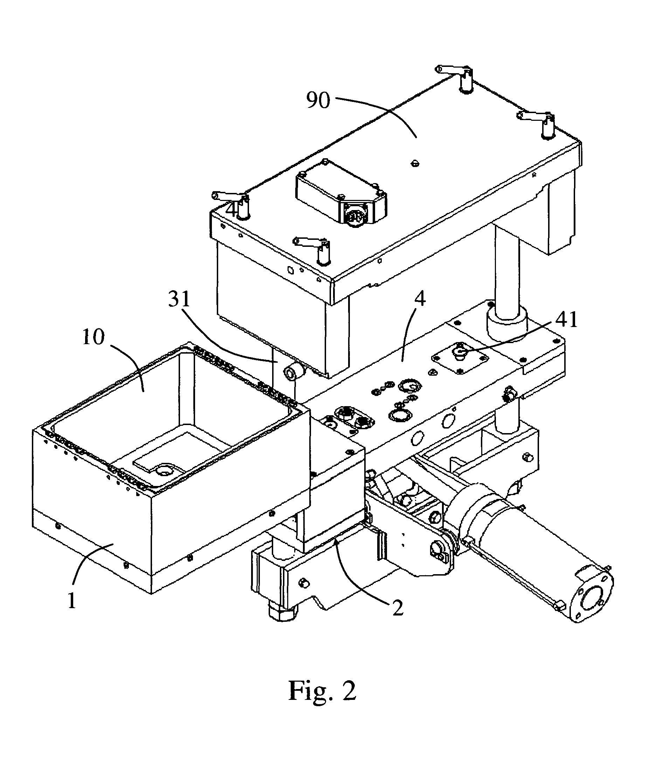

The working stations comprise a tool 1 adapted to carry out the corresponding actions, for packages with a predetermined shape. If packages with a different shape are going to be formed, closed and/or cut, for example, it is usually necessary to replace the tool 1 with a new one adapted to support the shape of the new packages. Figures 1 and 2 show an embodiment of the tool change system of the invention, mounted on a working station of the machine 100, said working station corresponding with a forming station. Nevertheless, the tool change system of the invention could also be mounted on any other working station of the packaging machine 100. The system is also useful not only to replace a tool 1 with another tool 1 adapted to packages with a different shape, but also to replace said tool 1 when it has been damaged, for example.

In the forming station the packages are formed. The tool 1 comprises a mould 19 comprising at least one cavity 19' with the shape of a package to be formed, and the forming station also comprises a male 90 faced to said tool 1. A web or a film (not shown in Figures) is disposed between the tool 1 and the male 90, and then said tool 1 is displaced upwardly pressing the film against the male 90, the film acquiring the shape of the cavity of said tool 1, which corresponds with the shape of the package, a package being so formed. Before being disposed between the tool 1 and the male 90, normally, the film is heated in order to facilitate its forming. The machine 100 comprises a longitudinal structure 3 comprising at least two parallel rails 30 extended longitudinally, and a working station linked to said rails 30, the tool 1 being displaced upwardly and downwardly guided by the rods 31 and 32.

Once a package is formed, it can be taken to the sealing station. Said sealing station comprises a tool 1 comprising a welding unit (not shown in Figures), a male and corresponding rods, linked to the rails 30 of the structure 3, and in said station the package is closed the edges of the package being welded to an upper film. If said package has been formed and closed together with other packages, said packages are taken to a cutting station comprising also a tool 1, a male and corresponding rods, linked to the rails 30 of the structure 3, the tool 1 comprising cutting means (not shown in Figures) for pressing the film against the edges of each package (in the case of the blister machines), cutting said film, in such a way that the packages are separated ones from the others. Said processes are well known from prior art, and are no longer detailed because they are not an object of the invention.

The tool 1 comprises at least one cavity 10 where a unit adapted to packages of a predetermined shape is disposed, said unit corresponding with a mould, a sealing unit or a cutting unit depending on the working station where it is disposed. If a package of a different shape is going to be packaged in the machine 100, the tool 1 must be replaced with another tool 1 comprising a unit adapted to the shape of the new packages, a tool change system being used for that purpose. The tool change system comprises transfer means 2 adapted to transfer at least one tool 1 to or from the machine 100. The transfer means 2 are adapted to rotatably transfer a tool 1 to or from the machine 100. In this way, it is possible to replace a tool 1 with a different tool 1 in a very easy, fast and comfortable way, without the need of incorporating additional means for achieving said interchange, for example. Besides, the user in charge of carrying out the change does not have to act upon said tool 1 to transfer it from the machine 100, the actuation of more than one users being avoided, and a big effort of the user being avoided.

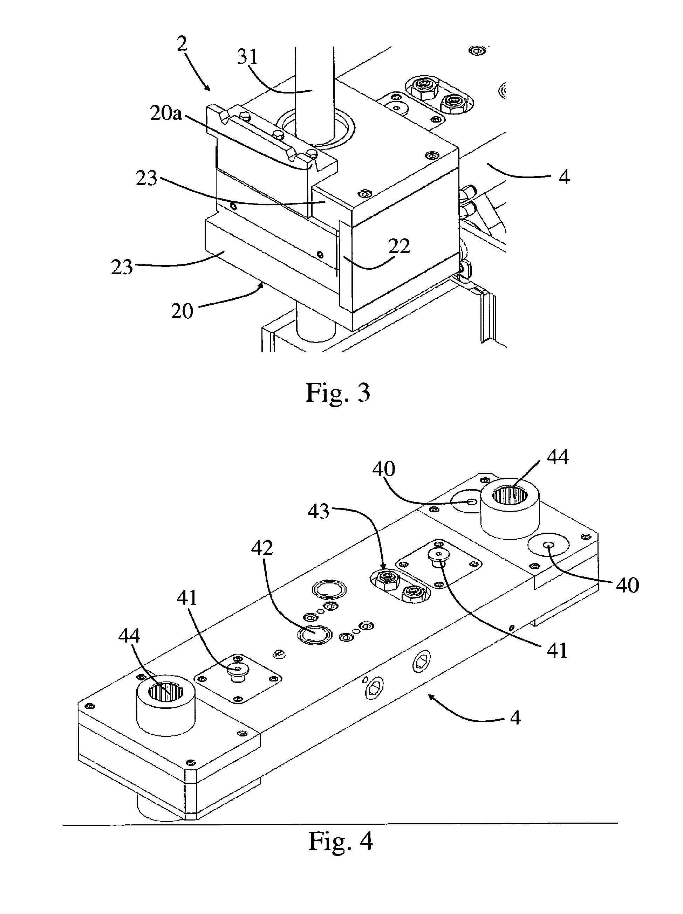

With reference to Figure 3, the transfer means 2 comprise at least one transfer element 20, which rotates in respect of a vertical shaft linked to the structure 3 of the machine 100, which corresponds with the rod 31, to transfer the tool 1 to or from said machine 100, said tool 1 rotating jointly with said transfer element 20. The transfer element 20 comprises at least one protrusion 20a by means of which said transfer element 20 cooperates with the tool 1 for transferring the rotation of said transfer element 20 to said tool 1. The tool 1 can comprise an union housing where the protrusion 20a is accommodated, but, preferably, the system of the invention comprises an union element 12 fixed to a lateral surface 13 of the tool 1, said union element 12 comprising a union housing (not referenced in the figures) to accommodate the protrusion 20a, said union housing comprising a shape substantially equal to the negative of the protrusion 20a, so that said protrusion 20a is fitted by gravity y the tool 1 is so fixed in a fast and easy way (when disposing said tool 1 and when taken it away). The tool 1 and the transfer element 20 are, preferably, coupled at any time, by means of the protrusion 20a and the union housing. The transfer element 20 has a substantially "C" shape, comprising a substantially vertical wall 22, and two faced substantially horizontal walls 23. One of said substantially horizontal walls 23 comprises the protrusion 20a, preferably the horizontal wall 23 disposed above, and a handle 24 (if there was) is fixed to the substantially vertical wall 22 of the transfer element 20. The shaft 31 passes through both horizontal walls 23, and the base plate 4 is disposed between said substantially horizontal walls 23, said shaft 31 also passing through said base plate 4. The base plate 4 comprises a hole 44 adapted to allow the pass of the shaft 31.

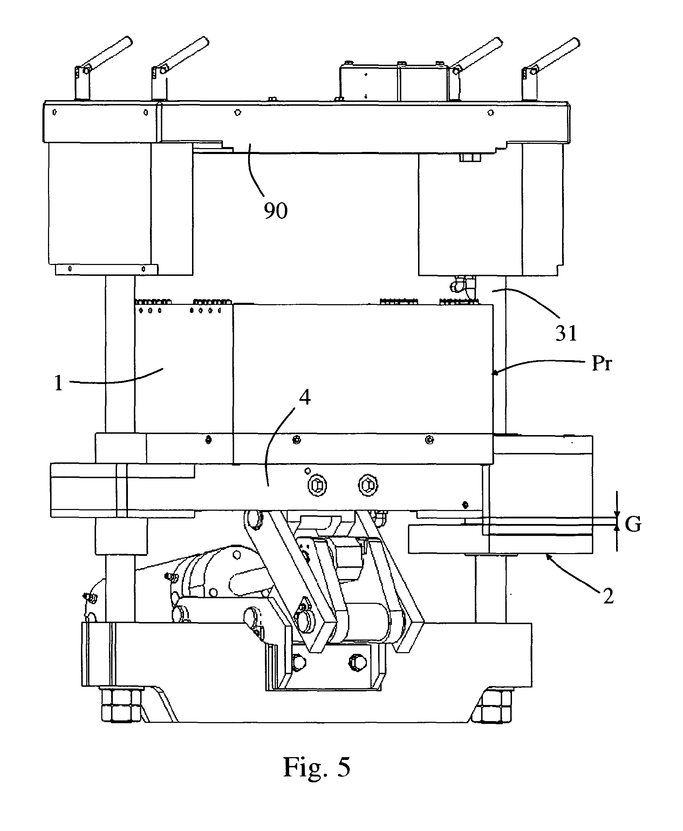

The system of the invention also comprises a base plate 4 shown in Figure 4, said base plate 4 comprising locking means for locking the tool 1 during normal operation of the corresponding working station, preventing the rotation of said tool 1 during said operation. When the tool 1 is locked, the transfer element 20 is in a rest position Pr as shown in Figure 5. The locking means comprise at least one locking piston 41 which sticks out from an upper face 4a of the base plate 4, said locking piston 41 locking the tool 1 when the transfer element 20 is in the rest position Pr, preventing said tool 1 from rotating. Preferably, said tool 1 comprises a housing 14 in its base where the locking piston 41 is housed when the transfer element 20 is in the rest position Pr, the tool 1 being locked. With the transfer element 20 in the rest position Pr, a gap G is present between the lowest substantially horizontal wall 23 and the base plate 4.

The base plate 4 can comprise vacuum means 42 for attracting the film in the forming station for example, to confer said film the shape of the unit disposed in the tool 1, and refrigerating means 43 for refrigerating the tool 1 when it is necessary, which comprise, for example, a pair of conducts. The tool 1 also comprises connection means (not shown in Figures) to cooperate with said refrigerating means 43 and said vacuum means 42, the locking piston 41 and the groove 14 being disposed in such a manner, that when they cooperate maintaining the tool 1 locked, said refrigerating means 43 and said vacuum means 42 are aligned with the corresponding connection means of said tool 1.

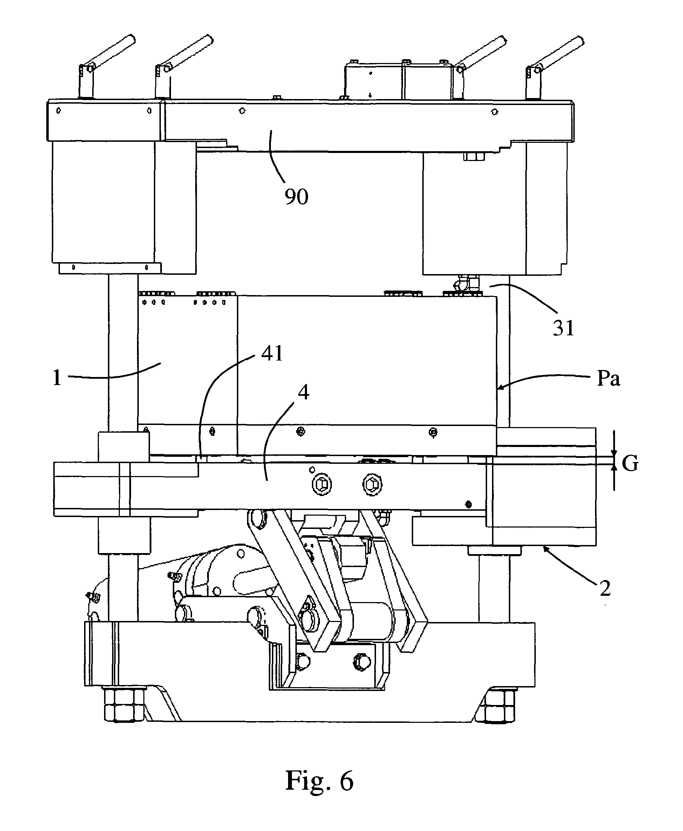

When the tool 1 must be replaced, firstly said tool 1 must be released. The system of the invention also comprises actuating means for releasing the tool 1, said actuating means causing a displacement of the transfer element 20 from the rest position Pr to an active position Pa, shown in Figure 6, where the tool 1 is no longer locked. Due to the protrusion 20a of the transfer element 20 and to the union housing of the tool 1 or of the union element 12, the displacement of said transfer element 20 causes the displacement of said tool 1, the housing 14 being taken away from the locking piston 41, said tool 1 being released. The actuating means comprise at least one lifting piston 40 disposed inside the base plate 4 when the tool 1 is locked, said lifting piston 40 being taken out, at least partially, of said base plate 4 for releasing said tool 1 and comprising, preferably, a pneumatic or a hydraulic piston, or an equivalent device, for example. When it is taken out of said base plate 4, said lifting piston 40 pulls against the transfer element 20 causing a displacement of said transfer element 20 from the rest position Pr to the active position Pa, and now, with the transfer element 20 in the active position Pa, the gap G is present between the base plate 4 and the tool 1. Once the tool 1 has been released, the rotation of said tool 1 is allowed, the rotation of the transfer element 20 being also allowed, the replacement of said tool 1 being possible causing said rotation.

The lifting piston 40 comprises an upper surface which is in contact with the transfer element 20 when said transfer element 20 is in the active position Pa, also being in contact, then, when said transfer element 20 rotates in respect of the shaft 31. For avoiding a damage in the transfer element 20 and 7 or in the lifting piston 40 due to the friction between both of them when said transfer element 20 rotates, the lifting piston 40 is totally made of a low friction material (or being only the upper surface made of said material), such as Teflon® for example, or the lifting piston 40 could comprise a bearing on the upper surface.

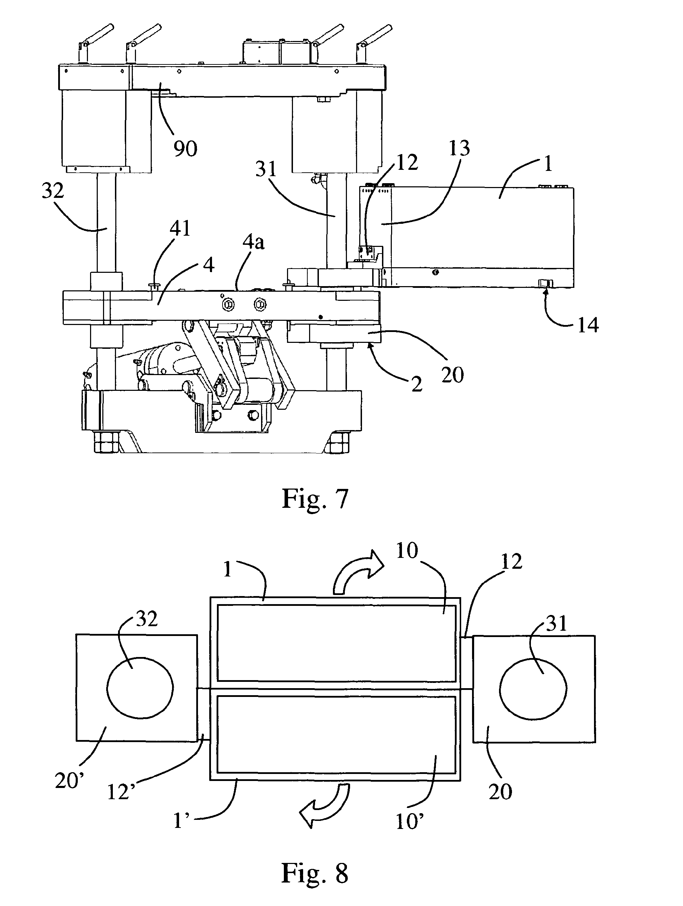

In the following, an operation mode for replacing a tool 1 will be explained. When it is desired to replace a tool 1, firstly the lifting piston 40 is actuated in order to displace the transfer element 20 to the active position Pa. Then, the rotation of the transfer element 20 in respect of the shaft 31 is caused, the tool 1 being rotated together with said transfer element 20 due to the protrusion 20a and the union housing. Said rotation can be caused manually (by means of the handle or an equivalent means fixed to the transfer element 20) or automatically (by mechanic means and electronic means). Once the tool 1 has been rotated and transferred from the machine 100, as shown in Figure 7, it can be handled directly by a user, by a pallet truck or by an equivalent apparatus, being removed from the transfer element 20. After removing the tool 1 from the transfer element 20, a new tool 1 is coupled to the transfer element 20 (the protrusion 20a of the transfer element 20 is accommodated in the groove 11 of the new tool 1), and said transfer element 20 is rotated, the new tool 1 rotating together with said transfer element 20. Once the new tool 1 is over the base plate 4, the lifting piston 40 is taken back inside said base plate 4 and the transfer element 20 is displaced from the active position Pa to the rest position Pr by gravity. Due to the cooperation between the union housing of the tool 1 and the protrusion 20a of the transfer element 20, said tool 1 is also displaced downwardly and the locking piston 41 is housed in the housing 14 of said tool 1, said tool 1 being locked.

A working station of a packaging machine 100 can comprise more than one tool change system. This case can be probable when the tool 1 has to be very big for example, and it could be easier to manage if it is divided in two or more different tools 1 and 1', each tool 1 and 1' requiring a tool change system. Figure 8 shows an example of a working station comprising two tool change systems of the invention, said station comprising an additional transfer means 2 with an additional transfer element 20' which rotates in respect of a second vertical shaft 32 linked to the longitudinal structure 3 of the machine 100, to transfer and additional tool 1' to or from said machine 100, said additional tool 1' rotating jointly with said additional transfer element 20'. Both the transfer element 20 and the additional transfer element 20' are substantially equal. The transfer element 20 associated to the tool 1 and the additional transfer element 20' associated to the additional tool 1' rotate in opposed directions, so that the rotation of one of said transfer elements 20 or 20' does not interfere in the other transfer element 20' or 20'

## Claims

1. Tool change system for a packaging machine, comprising transfer means (2) adapted to rotatably transfer the tool (1) to or from the packaging machine (100), the transfer means (2) comprising at least one transfer element (20) which rotates in respect of a vertical shaft (31) linked to a longitudinal structure (3) of the machine (100), to transfer the tool (1) to or from said machine (100), said tool (1) rotating jointly with said transfer element (20), **characterised in that** the transfer element (20) comprises at least one protrusion (20a) by means of which said transfer element (20) cooperates with the tool (1) for transferring the rotation of said transfer element to said tool (1), the tool change system comprises a base plate (4) comprising locking means for locking the tool (1), preventing the rotation of said tool (1) and of the transfer element (20), said transfer element (20) being in a rest position (Pr) when said tool (1) is locked, and actuating means for releasing the tool (1), said actuating means causing a displacement of the transfer element (20) from the rest position (Pr) to an active position (Pa), the tool (1) being displaced together with the transfer element (20), said tool (1) being released with said displacement.

2. Tool change system according to claim 1, wherein the tool (1) comprises an union housing where the protrusion (20a) is accommodated.

3. Tool change system according to claim 2, comprising an union element (12) fixed to a lateral surface (13) of the tool (1), said union element (12) comprising the an union housing where the protrusion (20a) is accommodated.

4. Tool change system according to any of claims 2 or 3, wherein the union housing comprises a shape substantially equal to the negative of the protrusion (20a).

5. Tool change system according to any of claims 1 to 4, wherein the locking means comprise at least one locking piston (41) which sticks out from an upper surface (4a) of the base plate (4), said locking piston (41) locking the tool (1) when the transfer element (20) is in the rest position (Pr), preventing said tool (1) from rotating.

6. Tool change system according to claim 5, wherein the tool (1) comprises a housing (14) where the locking piston (41) is housed when the transfer element (20) is displaced the rest position (Pr).

7. Tool change system according to any of claims 1 to 6, wherein the actuating means comprise at least one lifting piston (40) disposed inside the base plate (4) when the tool (1) is locked, said lifting piston (40) being, at least partially, taken out of said base plate (4) for releasing said tool (1), said lifting piston (40) pulling the transfer element (20) when it is taken out of said base plate (4), said transfer element (20) being displaced and said displacement causing the displacement and release of the tool (1).

8. Tool change system according to claim 7, wherein the lifting piston (40) comprises an upper surface which is contact with the transfer element (20) when said transfer element (20) is the active position (Pa), said lifting piston (40) being totally made of a low friction material or being only the upper surface which is made of said material, such that the transfer element (20) can rotate without being damaged and/or without damaging the lifting piston (40).

9. Tool change system according to any of claims 1 to 8, wherein the transfer element (20) has a substantially "C" shape, comprising a substantially vertical wall (22), and two faced substantially horizontal walls (23), one of said substantially horizontal walls (23) comprising the protrusion (20a).

10. Tool change system according to claim 9, wherein the shaft (31) passes through the substantially horizontal walls (23) and the base plate (4).

11. Packaging machine **characterised in that** it comprises at least one tool change system according to any of the preceding claims.

## Patentansprüche

1. Werkzeugwechselsystem für eine Verpackungsmaschine, umfassend Übertragungsmittel (2), die dazu geeignet sind, um das Werkzeug (1) rotationsmäßig auf die/von der Verpackungsmaschine (100) zu übertragen, wobei die Übertragungsmittel (2) mindestens ein Übertragungselement (20) umfassen, das sich im Verhältnis zu einer senkrechten Welle (31) dreht, die mit einer Längsstruktur (3) der Maschine (100) verbunden ist, um das Werkzeug (1) auf die oder von der Maschine (100) zu übertragen, wobei sich das Werkzeug (1) zusammen mit dem Übertragungselement (20) dreht, **dadurch gekennzeichnet, dass** das Übertragungselement (20) mindestens einen Vorsprung (20a) umfasst, anhand dessen das Übertragungselement (20) mit dem Werkzeug (1) zusammenwirkt, um die Drehung des Übertragungselements auf das Werkzeug (1) zu übertragen, das Werkzeugwechselsystem eine Auflageplatte (4) umfasst, die Feststellmittel, um das Werkzeug (1) festzustellen, wodurch die Drehung des Werkzeugs (1) und des Übertragungselements (20) verhindert wird, wobei sich das Übertragungselement (20) in einer Ruhestellung (Pr) befindet, wenn das Werkzeug (1) festgestellt ist, und Betätigungsmittel zum Freigeben des Werkzeugs (1) umfasst, wobei die Betätigungsmittel eine Verschiebung des Übertragungselements (20) von der Ruhestellung (Pr) in eine aktive Stellung (Pa) veranlassen, wobei das Werkzeug (1) mit dem Übertragungselement (20) verschoben wird, wobei das Werkzeug (1) durch die Verschiebung freigegeben wird.

2. Werkzeugwechselsystem nach Anspruch 1, wobei das Werkzeug (1) ein Verbindungsgehäuse umfasst, in dem der Vorsprung (20a) aufgenommen ist.

3. Werkzeugwechselsystem nach Anspruch 2, umfassend ein Verbindungselement (12), das an einer Seitenfläche (13) des Werkzeugs (1) befestigt ist, wobei das Verbindungselement (12) das Verbindungsgehäuse umfasst, in dem der Vorsprung (20a) aufgenommen ist.

4. Werkzeugwechselsystem nach einem der Ansprüche 2 oder 3, wobei das Verbindungsgehäuse eine Form aufweist, die im Wesentlichen gleich dem Negativ des Vorsprungs (20a) ist.

5. Werkzeugwechselsystem nach einem der Ansprüche 1 bis 4, wobei die Feststellmittel mindestens einen Feststellkolben (41) umfassen, der von einer oberen Oberfläche (4a) der Auflageplatte (4) absteht, wobei der Feststellkolben (41) das Werkzeug (1) feststellt, wenn sich das Übertragungselement (20) in der Ruhestellung (Pr) befindet, wodurch verhindert wird, dass sich das Werkzeug (1) dreht.

6. Werkzeugwechselsystem nach Anspruch 5, wobei das Werkzeug (1) ein Gehäuse (14) umfasst, in dem der Feststellkolben (41) untergebracht ist, wenn das Übertragungselement (20) in die Ruhestellung (Pr) verschoben ist.

7. Werkzeugwechselsystem nach einem der Ansprüche 1 bis 6, wobei die Betätigungsmittel mindestens einen Hebekolben (40) umfassen, der im Innern der Auflageplatte (4) angeordnet ist, wenn das Werkzeug (1) festgestellt ist, wobei der Hebekolben (40) mindestens teilweise aus der Auflageplatte (4) herausgenommen ist, um das Werkzeug (1) freizugeben, wobei der Hebekolben (40) das Übertragungselement (20) zieht, wenn er aus der Auflageplatte (4) herausgenommen wird, wobei das Übertragungselement (20) verschoben wird und diese Verschiebung die Verschiebung und Freigabe des Werkzeugs (1) bewirkt.

8. Werkzeugwechselsystem nach Anspruch 7, wobei der Hebekolben (40) eine obere Oberfläche umfasst, die mit dem Übertragungselement (20) in Berührung steht, wenn sich das Übertragungselement (20) in der aktiven Stellung (Pa) befindet, wobei der Hebekolben (40) ganz aus einem reibungsarmen Material hergestellt ist oder nur die obere Oberfläche aus dem Material hergestellt ist, so dass sich das Übertragungselement (20) drehen kann, ohne beschädigt zu werden und/oder ohne den Hebekolben (40) zu beschädigen.

9. Werkzeugwechselsystem nach einem der Ansprüche 1 bis 8, wobei das Übertragungselement (20) eine im Wesentlichen "C"-förmige Form aufweist, die eine im Wesentlichen senkrechte Wand (22) und zwei im Wesentlichen waagerechte Wände (23) umfasst, wobei eine der im Wesentlichen waagerechten Wände (23) den Vorsprung (20a) umfasst.

10. Werkzeugwechselsystem nach Anspruch 9, wobei die Welle (31) durch die im Wesentlichen waagerechten Wände (23) und die Auflageplatte (4) geht.

11. Verpackungsmaschine, **dadurch gekennzeichnet, dass** sie mindestens ein Werkzeugwechselsystem nach einem der vorhergehenden Ansprüche umfasst.

## Revendications

1. Système de changement d'outil pour une machine de conditionnement, comprenant des moyens de transfert (2) adaptés pour transférer par rotation l'outil (1) sur/de la machine de conditionnement (100), les moyens de transfert (2) comprenant au moins un élément de transfert (20) qui tourne par rapport à un arbre vertical (31) relié à une structure longitudinale (3) de la machine (100) pour transférer l'outil (1) sur ou de ladite machine (100), ledit outil (1) tournant en conjonction avec ledit élément de transfert (20), **caractérisé en ce que** l'élément de transfert (20) comprend au moins une saillie (20a) au moyen de laquelle ledit élément de transfert (20) coopère avec l'outil (1) pour transférer la rotation dudit élément de transfert audit outil (1), le système de changement d'outil comprend une plaque de base (4) comprenant des moyens de blocage pour bloquer l'outil (1), empêchant la rotation dudit outil (1) et de l'élément de transfert (20), ledit élément de transfert (20) se trouvant dans une position de repos (Pr) lorsque ledit outil (1) est bloqué, et des moyens d'actionnement pour libérer l'outil (1), lesdits moyens d'actionnement provoquant un déplacement de l'élément de transfert (20) de la position de repos (Pr) à une position active (Pa), l'outil (1) étant déplacé avec l'élément de transfert (20), ledit outil (1) étant libéré par ledit déplacement.

2. Système de changement d'outil selon la revendication 1, dans lequel l'outil (1) comprend un boîtier de raccordement dans lequel est reçue la saillie (20a).

3. Système de changement d'outil selon la revendication 2, comprenant un élément de raccordement (12) fixé à une surface latérale (13) de l'outil (1), ledit élément de raccordement (12) comprenant le boîtier de raccordement dans lequel est reçue la saillie (20a).

4. Système de changement d'outil selon l'une quelconque des revendications 2 ou 3, dans lequel le boîtier de raccordement comprend une forme substantiellement égale au négatif de la saillie (20a).

5. Système de changement d'outil selon l'une quelconque des revendications 1 à 4, dans lequel les moyens de blocage comprennent au moins un piston de blocage (41) qui dépasse d'une surface supérieure (4a) de la plaque de base (4), ledit piston de blocage (41) bloquant l'outil (1) lorsque l'élément de transfert (20) se trouve dans la position de repos (Pr), empêchant ledit outil (1) de tourner.

6. Système de changement d'outil selon la revendication 5, dans lequel l'outil (1) comprend un boîtier (14) dans lequel est logé le piston de blocage (41) lorsque l'élément de transfert (20) est déplacé dans la position de repos (Pr).

7. Système de changement d'outil selon l'une quelconque des revendications 1 à 6, dans lequel les moyens d'actionnement comprennent au moins un piston de levage (40) disposé à l'intérieur de la plaque de base (4) lorsque l'outil (1) est bloqué, ledit piston de levage (40) étant au moins en partie sorti de ladite plaque de base (4) pour libérer ledit outil (1), ledit piston de levage (40) tirant l'élément de transfert (20) lorsqu'il est sorti de ladite plaque de base (4), ledit élément de transfert (20) étant déplacé et ledit déplacement provoquant le déplacement et la libération de l'outil (1).

8. Système de changement d'outil selon la revendication 7, dans lequel le piston de levage (40) comprend une surface supérieure qui est en contact avec l'élément de transfert (20) lorsque ledit élément de transfert (20) se trouve dans la position active (Pa), ledit piston de levage (40) étant entièrement réalisé à partir d'un matériau à faible friction, ou bien seule la surface supérieure est réalisée à partir dudit matériau, de sorte que l'élément de transfert (20) peut tourner sans être endommagé et/ou sans endommager le piston de levage (40).

9. Système de changement d'outil selon l'une quelconque des revendications 1 à 8, dans lequel l'élément de transfert (20) présente une forme substantiellement en "C", comprenant une paroi (22) substantiellement verticale, et deux parois (23) substantiellement horizontales, l'une desdites parois (23) substantiellement horizontales comprenant la saillie (20a).

10. Système de changement d'outil selon la revendication 9, dans lequel l'arbre (31) passe par les parois (23) substantiellement horizontales et la plaque de base (4).

11. Machine de conditionnement **caractérisée en ce qu'**elle comprend au moins un système de changement d'outil selon l'une quelconque des revendications précédentes.
